# EUROPÄISCHE PATENTANMELDUNG

(11) **EP 3 518 480 A1**
(43) Veröffentlichungstag der Anmeldung: **31.07.2019**
(21) Anmeldenummer: 18153182.3
(22) Anmeldetag: 24.01.2018
(51) Int. Cl.: H04L 12/913, H04L 29/08

(54) **VERFAHREN ZUR DATEN-KOMMUNIKATION IN EINEM ETHERNET-BASIERTEN, INSBESONDERE INDUSTRIELLEN NETZWERK VORRICHTUNG ZUR DURCHFÜHRUNG DES VERFAHRENS SOWIE COMPUTERPROGRAMM UND COMPUTERLESBARES MEDIUM**

(71) Anmelder: Siemens Aktiengesellschaft, 80333 München (DE)
(72) Erfinder: Fischer, Thomas, 90763 Fürth (DE); Höme, Stephan, 91126 Schwabach (DE); Jung, Konstantin, 90537 Feucht (DE); Kerschbaum, Sven, 90768 Fürth (DE); Kießling, Marcel, 91235 Velden (DE); Volkmann, Frank, 90475 Nürnberg (DE)

(57) **Zusammenfassung**

Die Erfindung betrifft ein Verfahren zur Daten-Kommunikation in einem Ethernet-basierten, insbesondere industriellen Netzwerk mit einem oder mehreren Knotenpunkten (5), wobei an einem Knotenpunkt (5) basierend auf einer Reservierung für einen Stream in Richtung eines Stream-Teilnehmers (1, 2, 3, 4)eine Reservierung für einen Stream in Richtung eines Stream-Initiators (1, 2, 3, 4) vorgenommen wird. Des Weiteren betrifft die Erfindung eine Vorrichtung zur Durchführung des Verfahrens. Schließlich betrifft die Erfindung ein Computerprogramm und ein computerlesbares Medium.

## Beschreibung

Die Erfindung betrifft ein Verfahren zur Daten-Kommunikation in einem Ethernet-basierten, insbesondere industriellen Netzwerk. Darüber hinaus betrifft die Erfindung eine Vorrichtung zur Durchführung des Verfahrens. Schließlich betrifft die Erfindung ein Computerprogramm und ein computerlesbares Medium.

Im Rahmen der IEEE-Standardisierung wurde in der Arbeitsgruppe AVB (Audio-Video-Bridging) die Technologie Ethernet (s. IEEE 802) um Mechanismen zur Erreichung von garantierter QoS ("Quality of Service" - auch als Dienstgüte bezeichnet) erweitert. Dabei wurde eine neue Art von Verkehr definiert, die sogenannten Streams. Ein aus dem Stand der Technik vorbekannter Stream gemäß diesen Standards stellt eine geschützte, unidirektionale Kommunikationsverbindung von einem auch als Talker bezeichneten, eine Datenquelle bildenden Gerät zu einem oder mehreren auch als Listener bezeichneten, die Datensenken, also Empfänger darstellenden Gerät dar. Für jeden Stream wird eine Reservierung durch ein sogenannte Stream-Reservation-Protokoll (SRP) durchgeführt. Dazu benötigt jeder Stream eine eigene Adresse, um die Weiterleitung zu kontrollieren. Die Adresse wird auch als Stream-DA bezeichnet, wobei DA für Destination Address, also Zieladresse steht. Die neue Technologie wird unter dem Namen TSN (Time-Sensitive-Networking) weiterentwickelt.

Der Anmelderin ist bekannt, dass im Bereich der Industrie auf Ethernet mit eigenen Erweiterungen für Echtzeitsysteme zurückgegriffen wird. Hier seien beispielhaft das sogenannte PROFINET RT und IRT genannt. PROFINET verwendet für die Kommunikation bidirektionale Verbindungen und basiert auf Standard-Ethernet (PROFINET RT) oder verwendet proprietäre Erweiterungen (PROFINET IRT).

In industriellen Netzwerken haben weder AVB noch die Weiterentwicklung TSN bisher Einzug gehalten.

Nach Auffassung der Anmelderin besteht ein großes Potential dieser Technologien auch für industrielle Netzwerke. Dabei ist jedoch zu berücksichtigen, dass im Rahmen industrieller Netzwerke oftmals ein Datenaustausch zwischen Teilnehmern in beide Richtungen erforderlich ist. Dies kann beispielsweise der Fall sein, wenn ein Controller, etwa eine speicherprogrammierbare Steuerung (SPS) einer Automatisierungsanlage mit einem sowohl wenigstens einen Sensor als auch wenigstens einen Aktor umfassenden Gerät kommuniziert, wobei dann insbesondere von dem Sensor erfasste Istzustände an den Controller übermittelt werden müssen und in umgekehrter Richtung von dem Controller Steuerungssignale an den Aktor. Das bedeutet, sowohl der Controller als auch das Gerät mit Sensor(en) und Aktor(en) ist sowohl Datenquelle als auch Datensenke.

Würden die bekannten Technologien, insbesondere AVB bzw. TSN einfach auf diese Situation übertragen, wären für alle Teilnehmerpaare, die einen Datenaustausch in beide Richtungen erfordern zwei Streams erforderlich, was zu einer hohen Anzahl von Streams und somit auch der für diese erforderlichen Adressen führen würde.

Gerade die Adressen und die zur Verwaltung von Streams benötigten Ressourcen (u.a. Verwaltung, Verbindungs-Aufbau, Diagnoseinformationen, ...) sind in einem Netzwerk jedoch in der Regel begrenzt. So ist die maximale Anzahl an Streams stark Hardware-abhängig, liegt insbesondere im Bereich von 100 bis 10.000 im gesamten Netzwerk. Streams stellen dadurch eine sehr wertvolle Netzwerk-Ressource dar und mit zunehmender Anzahl von Streams steigen der Verwaltungsaufwand und die dafür benötigten Ressourcen in jeder beteiligten Netzwerkkomponente, insbesondere den Knotenpunkten, etwa Bridges des Netzwerkes an.

Für den vorgenannten Fall einer Kommunikation zwischen einem Controller und einem Gerät mit Sensor(en) und Aktor(en) wären zwei Streams und somit auch zwei Weiterleite-Adressen erforderlich. Für den Stream vom Sensor in Richtung des Controllers wäre der Sensor die auch als Talker bezeichnete Datenquelle und der Controller der auch als Listener bezeichnete Empfänger und für den zweiten Stream in Richtung des Aktors wäre der Controller Talker und der Aktor Listener.

Da, wie vorstehend bereits angemerkt, jeder Stream erhebliche Ressourcen belegt, wäre ein entsprechender Ansatz zwar prinzipiell möglich, aber nicht praktikabel.

Ausgehend davon besteht die Aufgabe der vorliegenden Erfindung darin, Möglichkeiten zu schaffen, mit vergleichsweise geringem Aufwand unter effizienter Nutzung vorhandener Ressourcen einen Datenaustausch zwischen Teilnehmern eines insbesondere industriellen Ethernet-basierten Netzwerkes zu schaffen.

Diese Aufgabe wird gelöst durch ein Verfahren zur Daten-Kommunikation in einem Ethernet-basierten, insbesondere industriellen Netzwerk mit einem oder mehreren Knotenpunkten, wobei an einem Knotenpunkt basierend auf einer Reservierung für einen Stream in Richtung eines Stream-Teilnehmers eine Reservierung für einen Stream in Richtung eines Stream-Initiators vorgenommen wird.

Besonders bevorzugt ist vorgesehen, dass über einen Stream ein Datentransfer zwischen den Teilnehmern wenigstens eines Stream-Teilnehmerpaares, welches genau einen Stream-Initiator und genau einen über einen Netzwerkpfad mit dem Stream-Initiator verbundenen Stream-Teilnehmer umfasst, erfolgt, wobei der Stream einen bidirektionalen Datentransfer zwischen dem Stream-Initiator und dem Stream- Teilnehmer ermöglicht und die Einrichtung des bidirektionalen Streams zumindest folgende Schritte umfasst:
- der Stream-Initiator kündigt einen Stream, insbesondere gemäß den AVB-Standards oder dem den IEEE 802.1 Standard erweiternden TSN-Standard für von ihm bereitgestellte Daten an und beschreibt die Eigenschaften des Streams, wobei er insbesondere zumindest eine Stream-ID und eine Weiterleite-Adresse und eine Bandbreiteninformation für den von ihm abgehenden Datentransfer angibt,
- die Ankündigung des Streams und die Stream-Beschreibung wird an den Knotenpunkt bzw. die Knotenpunkte im Netzwerk verteilt, wobei dann jeder Knotenpunkt die Information seines Ports in Richtung des Stream-Initiators, also die Information seines Initiatorports führt,
- der Stream-Teilnehmer meldet sich an den von dem Stream-Initiator angekündigten Stream an,
- über denjenigen Knotenpunkt bzw. diejenigen Knotenpunkte, die auf dem Netzwerkpfad zwischen dem Stream-Teilnehmer und dem Stream-Initiator liegen, wird die Information der Anmeldung von dem Stream-Teilnehmer an den Stream-Initiator übermittelt,
- an demjenigen Knotenpunkt bzw. denjenigen Knotenpunkten, die auf dem Netzwerkpfad zwischen dem Stream-Teilnehmer und dem Stream-Initiator liegen, wird jeweils eine Reservierung an dem Port in Richtung des Stream-Teilnehmers, also an dem Teilnehmerport für die Datenübertragung von dem Stream-Initiator an den Stream-Teilnehmer durchgeführt,
   und
   zusätzlich jeweils eine Reservierung an dem Port in Richtung des Stream-Initiators, also dem Initiatorport für die Datenübertragung von dem Stream-Teilnehmer an den Stream-Initiator durchgeführt, wobei die Reservierung des Initiatorports auf der gleichen Weiterleite-Adresse erfolgt wie die Reservierung des Teilnehmerports.

Mit anderen Worten liegt der Grundgedanke der vorliegenden Erfindung darin, einen neuen Stream einzuführen, mit dem in Abweichung von den bisherigen Standards, gemäß denen Streams ausschließlich einen unidirektionalen Datentransfer ermöglichen, einen Datenaustausch zwischen zwei Kommunikationspartnern in beide Richtungen stattfindet. Hierzu wird insbesondere aufbauend auf der Stream-Reservierung gemäß den vorbekannten Standards, etwa AVB oder TSN, eine erweiterte Stream-Reservierung durchgeführt. Konkret wird zusätzlich zu der vorbekannten Reservierung an dem bzw. den Knotenpunkten, die auf dem Netzwerkpfad zwischen den beiden Kommunikationspartnern liegen, also zusätzlich zu der Reservierung nur an dem Port in Richtung des Stream-Teilnehmers noch eine Reservierung an dem Port in Richtung des Stream-Initiators, also für die gemäß den vorbekannten Standards nicht vorgesehene "Rückrichtung" bzw. den "Rückkanal" durchgeführt.

Es sei angemerkt, dass gemäß dem Stand der Technik nach dem AVB- und TSN-Standard bei den Stream Teilnehmern von einem Daten sendendenden Talker und einem (oder mehreren) Daten empfangenden Listener(n) gesprochen wird, da diese Standards ausschließlich unidirektionale Streams vorsehen, und somit der Talker und der/die Listener feststehen. Da die vorliegende Erfindung in Abweichung von dem Stand der Technik bidirektionale Streams vorsieht, die einen Datenaustausch zwischen zwei Teilnehmern in beide Richtungen ermöglicht, also jeder der beiden Kommunikationspartner sowohl Talker als auch Listener ist, wird bewusst auf die Verwendung der üblichen Begriffe Talker und Listener verzichtet und stattdessen von einem Stream-Initiator und einer Stream-Teilnehmer gesprochen. Dabei hat der Stream-Initiator mit dem klassischen Talker nach dem Stand der Technik gemeinsam, dass er den Stream anbietet/initiiert. Der Stream-Teilnehmer hat mit dem klassischen Listener gemeinsam, da er sich an einem angebotenen/initiierten Stream anmeldet. Dabei gilt, dass der Stream-Teilnehmer erfindungsgemäß nicht nur Daten empfängt, also nicht nur "hört" (listen) sondern auch Daten sendet, also "spricht" (talk), wobei von ihm gesendete Daten von dem Stream-Initiator wiederum empfangen werden (listen).

Die Input/Output-, insbesondere Sensor/Aktor-Daten in einem industriellen Netz weisen in der Regel die selber Verkehrscharakteristik auf (z.B. Größe des Datenframes, Sendezyklus), wie etwa bei der zyklischen Übertragung bei Profinet IO. Ist dies der Fall, kann die vom Stream-Initiator angegebene Verkehrscharakteristik auch für die erfindungsgemäß vorgesehene "Rückrichtung" vom Stream-Teilnehmer zum Stream-Initiator herangezogen werden. Natürlich ist es abweichend hiervon aber auch möglich, dass für die Rückrichtung eine andere Verkehrscharakteristik verwendet/reserviert wird.

Gemäß den bekannten Standards werden bei dem Reservierungsmodell der Empfangsport und der Sendeport der Bridge bzw. Bridges intern als Status geführt. Durch die erfindungsgemäße Erweiterung können mit geringem Aufwand an beiden Ports, also dem jeweiligen Empfangs- und Sendeport die Ressourcen geprüft werden und die Weiterleitung kann für die gemeinsame Adresse an beiden Ports des bzw. der Knotenpunkte zwischen den beiden Kommunikationspartner, also zwischen dem Stream-Initiator und dem Stream-Teilnehmer aktiviert werden, sofern genügend Ressourcen vorhanden sind.

Im Rahmen der erfindungsgemäßen erweiterten Reservierung für die zusätzlich zu den vorbekannten Standards vorgesehene Rückrichtung kommt die gleiche Weiterleite-Adresse zum Einsatz wie für die Richtung vom Stream-Initiator zum Stream-Teilnehmer.

Im Ergebnis wird unter Verwendung nur eines einzigen Streams und einer einzigen Weiterleite-Adresse ein bidirektionaler Datenaustausch zwischen genau zwei Kommunikationspartnern in einem Netzwerk möglich, wobei die Netzwerkressourcen gegenüber dem Stand der Technik erheblich geschont werden, da für den Datenaustausch zwischen genau zwei Teilnehmern in beide Richtungen nur genau ein Stream und genau eine Weiterleite-Adresse erforderlich sind. Neben der Adressenanazahl werden auch der Aufwand für die Pfadberechnung und die benötigten Ressourcen zur Weiterleitung der Daten halbiert.

Durch den bei Ethernet vorhandenen "Rückspeiseschutz" von Paketen erfolgt bei der erfindungsgemäßen bidirektionalen Verbindung automatisch die Weiterleitung der jeweiligen Daten immer nur in die gewünschte Richtung im Netzwerk.

Bei der Weiterleitung von Ethernet-Frames wird gemäß IEEE 802.1Q der Empfangsport bei der Weiterleitung ausgeblendet. Dies ermöglicht die Weiterleitung der Daten in jeweils eine Richtung bei einer erfindungsgemäßen bidirektionalen Verbindung, wenn beide Ports für die Weiterleitung in der Filtering Database (FDB) des Knotenpunktes gemäß IEEE 802.1 Q eingetragen sind. Beide Teilnehmer sind dann gleichzeitig Sender und Empfänger des bidirektionalen Streams. Wenn der erfindungsgemäße Datenaustausch über einen neuen bidirektionalen Stream zwischen genau zwei Kommunikationspartnern erfolgt, ist insbesondere sichergestellt, dass der "Rückspeiseschutz" greift.

Da es im industriellen Umfeld in der Regel der Standard-Fall ist, dass ein Datenaustausch zwischen genau zwei Teilnehmern und in beide Richtungen erfolgen muss, insbesondere, wenn die Kommunikation beispielsweise zwischen einem Controller und einem I/O-Gerät oder auch zwischen zwei Controllern stattfindet, es sich also immer um eine 1:1-Kommunikationsverbindung mit der Eigenschaft handelt, dass beide Kommunikationspartner gleichzeitig Sender und Empfänger sind, ist das erfindungsgemäße Verfahren für das industrielle Umfeld besonders geeignet.

Ein weiterer Vorteil der erfindungsgemäßen Vorgehensweise besteht darin, dass, da die Reservierung für beide Richtungen erfolgt, wie es etwa im Datenaustausch zwischen Controller und einem I/O-Gerät nötig ist, eine aufwändige Abfrage von zwei Reservierungen und deren Reservierungsstati nicht erforderlich ist. Vielmehr kann durch die erfindungsgemäße bidirektionale Reservierung Adressen und Reservierungseinträge gespart werden und es kann die doppelte Anzahl von Verbindungen in einem bestehenden Netzwerk mit einer gegebenen Hardwarekonfiguration erhalten werden.

Für den Fall, dass in beide Richtungen die gleiche Datenmenge anfällt, wie es ebenfalls bei der Beziehung zwischen einem Controller und einem I/O-Gerät üblich ist, wo beispielsweise für beide Datentransferrichtungen 64 Byte benötigt werden, ist die Stream-Beschreibung im Rahmen des erfindungsgemäßen Verfahrens auch besonders einfach, denn in diesem Falle wird nur ein Eintrag für die Beschreibung der Daten, insbesondere nur eine Tspec (Englisch: Traffic Specification)nötig, was die Verwaltungsinformationen zusätzlich reduziert.

Es versteht sich das in einem Netzwerk mit einer Mehrzahl von angeschlossene Geräten nur ein Paar von Geräten in der erfindungsgemäßen Weise über einen bidirektionalen Stream Daten austauschen kann oder auch mehrere Paare von jeweils zwei Geräten. Es kann beispielsweise zwischen einer speicherprogrammierbaren Steuerung und mehreren Geräten, die jeweils sowohl an diese Senden als auch Daten von dieser empfangen wollen, jeweils ein bidirektionaler Stream eingerichtet werden.

In besonders vorteilhafter Ausgestaltung des erfindungsgemäßen Verfahrens ist vorgesehen, dass ein erweitertes Stream Reservation Protokoll verwendet wird, welches bevorzugt eine zusätzliche Reservierung des Initiatorports des Knotenpunktes bzw. der der Knotenpunkte auf dem Netzwerkpfad zwischen dem Stream-Initiator und dem Stream-Teilnehmer auf der gleichen Weiterleite-Adresse wie die Reservierung des Teilnehmerports des Knotenpunktes bzw. der Knotenpunkte ermöglicht. Bei dem erweiterten Stream-Reservation-Protokoll handelt es sich insbesondere um ein solches, das im Wesentlichen den Stream-Reservation-Protokollen der bekannten Standards, insbesondere AVB oder TSN entspricht, jedoch um die Reservierung des Ports in Richtung des Stream-Initiators, also des Initiatorports des Knotenpunktes bzw. der Knotenpunkte auf dem Netzwerkpfad erweitert ist. Konkret zeichnet sich ein erweitertes Stream-Reservierungs-Protokoll, was im Rahmen des erfindungsgemäßen Verfahrens zum Einsatz kommen kann durch folgende Eigenschaften aus. Zum Beispiel kann die Traffic Specification (TSpec) um einen optionalen Parameter erweitert werden, der angibt, ob auch die Rückrichtung vom Stream-Teilnehmer zum Stream-Initiator unter der gleichen Stream-ID reserviert werden soll. Der Stream-Initiator, der z.B. durch einen Controller bzw. eine SPS gegeben sein kann, kann dann im Systemhochlauf die entsprechenden bidirektionalen Streams mittels des neuen optionalen Parameters in der TSpec einrichten. Der/die Stream-Teilnehmer, der/die z.B. in Form von Sensoren/Aktoren vorliegen, nutzen dann den Stream. Dies ist insbesondere möglich, da der Controller aus dem Engineering (Offline) alle relevanten Informationen über die angeschlossenen Sensoren/Aktoren hat.

Weiterhin ist bevorzugt vorgesehen, dass für den Knotenpunkt bzw. die Knotenpunkte auf dem Netzwerkpfad zwischen dem Stream-Initiator und dem Stream-Teilnehmer sowohl an dem jeweiligen Initiator- als auch dem jeweiligen Teilnehmerport geprüft wird, ob ausreichend Ressourcen für den bidirektionalen Stream zur Verfügung stehen. Alternativ oder zusätzlich kann vorgesehen sein, dass in dem Knotenpunkt bzw. den Knotenpunkten auf dem Netzwerkpfad zwischen dem Stream-Initiator und dem Stream-Teilnehmer sowohl an dem Initiator- als auch dem Teilnehmerport die Weiterleitung der Daten in die jeweilige Richtung für die eine gemeinsame Weiterleite-Adresse aktiviert wird.

Eine weitere vorteilhafte Ausführungsform zeichnet sich dadurch aus, dass der Stream-Initiator im Rahmen der Stream-Beschreibung zusätzlich zu der Bandbreite für einen von ihm ausgehenden Datentransfer auch eine Bandbreite für den Rückkanal also den Datentransfer von dem Stream-Teilnehmer zu ihm angibt. Dies ist insbesondere von Vorteil, wenn für die Hin-und Rückrichtung z.B. unterschiedliche Bandbreiten und/oder weitere optionale Parameter in der TSpec, die die Verkehrscharakteristik und Anforderungen für den Rückkanal fordern, erforderlich sind, da dann ein konkreter angepasster Stream eingerichtet und die Ressourcen noch weiter geschont werden können.

Weiterhin ist bevorzugt vorgesehen, dass, nachdem sich genau ein Stream-Teilnehmer an dem Stream des Stream-Initiators angemeldet hat, die Anmeldung weiterer Stream-Teilnehmer an diesem Stream verhindert, insbesondere blockiert wird. Dann ist eine 1:1 Kommunikationsverbindung in jedem Falle sichergestellt und der bei Ethernet vorhandene "Rückspeiseschutz" greift, so dass vom Stream-Initiator bereitgestellte Daten immer nur an den Stream-Teilnehmer übertragen werden und umgekehrt.

In weiterer vorteilhafter Ausgestaltung ist vorgesehen, dass die Beschreibung des Streams durch den Stream-Initiator wenigstens eine Traffic Specification (Tspec) Parameter umfasst. Dies ist insbesondere völlig analog zu der Stream-Beschreibung, die bei dem bekannten AVB- bzw. TSN-Standard erfolgt.

Das erfindungsgemäße Verfahren wird weiterhin insbesondere in einem Ethernet-basierten Netzwerk mit P2P-Links ohne Hubs und ohne geteiltes Übertragungsmedium ("shared medium") durchgeführt.

Wie vorstehend bereits angemerkt, hat sich das erfindungsgemäße Verfahren als besonders geeignet für einen Datenaustausch im industriellen Umfeld, etwa für Komponenten industrieller Automatisierungsanlagen oder dergleichen erwiesen. Eine weitere vorteilhafte Ausführungsform kann sich entsprechend dadurch auszeichnen, es sich bei dem Stream-Initiator um einen Controller, insbesondere eine speicherprogrammierbare Steuerung, bevorzugt eines Steuerungssystems für einen technischen Prozess oder ein Fahrzeug handelt, und es sich bei dem Stream-Teilnehmer um ein I/O-Gerät, bevorzugt des Steuerungssystems, welches einen Sensor und einen Aktor umfasst oder mit einem Sensor und einem Aktor verbunden ist, oder um einen weiteren Controller, insbesondere eine weitere speicherprogrammierbare Steuerung, bevorzugt des Steuerungssystems handelt. Der umgekehrter Fall, also dass das I/O-Gerät der Stream-Initiator und der Controller der Stream-Teilnehmer ist, ist gleichermaßen möglich.

Sind der Stream-Initiator und der Stream-Teilnehmer durch entsprechende Komponenten gegeben, wird weiterhin bevorzugt auf Basis von zwischen diesen über den bidirektionalen Stream in beide Richtungen ausgetauschten Daten ein industrieller technischer Prozess oder ein Fahrzeug gesteuert.

Weiterer Gegenstand der Erfindung ist ein Steuerungsverfahren für einen industriellen technischen Prozess oder ein Fahrzeug, bei dem
- ein Sensor eines Steuerungssystems zyklisch Istzustände des technischen Prozesses oder Fahrzeugs erfasst und an einen Controller, insbesondere eine speicherprogrammierbare Steuerung des Steuerungssystems übermittelt,
- wobei der Controller unter Berücksichtigung der an ihn übermittelten Istzustände Steuersignale für einen Aktor des Steuerungssystems ermittelt und zyklisch an den Aktor übermittelt,
- wobei der Aktor zyklisch entsprechend den an ihn übermittelten Steuersignalen auf den technischen Prozess oder das Fahrzeug einwirkt,
- wobei die Übermittlung der Istzustände und Steuersignale über ein Ethernet-basiertes Netzwerk mit einem oder mehreren Knotenpunkten und unter Durchführung des Verfahrens nach einem der vorhergehenden Ansprüche erfolgt,
- wobei der Controller den Stream-Initiator darstellt und ein Gerät, welches den Sensor und den Aktor umfasst oder mit dem Sensor und dem Aktor verbunden ist, der Stream-Teilnehmer oder umgekehrt, und für die Übermittlung der Istzustände von dem Sensor an den Controller und für die Übermittlung der Steuersignale von dem Controller an den Aktor ein bidirektionaler Stream mit einer Weiterleite-Adresse für beide Richtungen eingerichtet wird.

Die vorstehende Aufgabe wird daher weiterhin gelöst durch eine Vorrichtung zur Durchführung des Verfahrens nach einem der vorhergehenden Ansprüche, umfassend
- wenigstens ein Daten bereitstellendes, den Stream-Initiator darstellendes Gerät,
- wenigstens ein weiteres, den Stream-Teilnehmer des Stream-Initiators darstellendes Gerät, welches ebenfalls Daten bereitstellt,
wobei der Stream-Initiator und der Stream-Teilnehmer über ein Ethernet-basiertes Netzwerk mit einem oder mehreren Knotenpunkten miteinander verbunden sind, und
wobei die Vorrichtung zur Durchführung des erfindungsgemäßen Verfahrens ausgebildet und eingerichtet ist, so dass für einen Austausch von Daten zwischen dem Stream-Initiator und dem Stream-Teilnehmer ein bidirektionaler Stream mit einer Weiterleite-Adresse für beide Richtungen eingerichtet werden kann oder eingerichtet wird.

Die Vorrichtung dient insbesondere der Steuerung eines industriellen technischen Prozess oder eines Fahrzeugs, wobei dann
- der Stream-Initiator durch einen Controller eines Steuerungssystems, insbesondere eine speicherprogrammierbare Steuerung gegeben ist, und
- der Stream-Teilnehmer durch ein Gerät, welches einen Sensor und einen Aktor des Steuerungssystems umfasst oder mit einem Sensor und einem Aktor des Steuerungssystems verbunden ist, oder durch einen weiteren Controller gegeben ist, oder umgekehrt,
- wobei die Vorrichtung ausgebildet und eingerichtet ist, um für die Übermittlung von Istzuständen von dem Sensor an den Controller und für die Übermittlung von Steuersignalen von dem Controller an den Aktor einen bidirektionalen Stream mit einer Weiterleite-Adresse für beide Richtungen einzurichten.

Es kann weiterhin vorgesehen sein, dass ein Computerprogramm bzw. eine Sammlung von Computerprogrammen zum Einsatz kommt, das bzw. die Programmcodemittel zur Durchführung sämtlicher Schritte des erfindungsgemäßen Verfahrens umfasst. Ein entsprechendes Programm bzw. eine entsprechende Programmsammlung kann beispielsweise auf einem oder mehreren Speichermedien einer erfindungsgemäßen Vorrichtung abgelegt sein.

Weitere Merkmale und Vorteile der vorliegenden Erfindung werden anhand der nachfolgenden Beschreibung einer Ausführungsform des Verfahrens der vorliegenden Erfindung unter Bezugnahme auf die beiliegende Zeichnung deutlich. Darin ist
- FIG 1: eine schematische Teildarstellung eines industriellen Netzwerkes;
- FIG 2: eine schematische Darstellung zu der Reservierung in einer Bridge des Netzwerkes aus Figur 1 in der Control Plane gemäß dem Stand der Technik;
- FIG 3: eine schematische Darstellung zu der Reservierung in einer Bridge des Netzwerkes aus Figur 1 in der Data Plane gemäß dem Stand der Technik;
- FIG 4: eine rein schematische Darstellung zum Status der 4 Ports einer Bridge des Netzwerkes aus Figur 1 für zwei unidirektionalen Streams nach dem Stand der Technik;
- FIG 5: eine rein schematische Darstellung einer Bridge des Netzwerkes aus Figur 1 und zweier unidirektionaler Streams durch die Bridge nach dem Stand der Technik;
- FIG 6: eine schematische Darstellung zu der Reservierung in einer Bridge des Netzwerkes aus Figur 1 in der Control Plane gemäß einer Ausführungsform der Erfindung;
- FIG 7: eine schematische Darstellung zu der Reservierung in einer Bridge des Netzwerkes aus Figur 1 in der Data Plane gemäß einer Ausführungsform der Erfindung;
- FIG 8: eine rein schematische Darstellung zum Status der 4 Ports einer Bridge des Netzwerkes aus Figur 1 für einen bidirektionalen Stream gemäß einer Ausführungsform der Erfindung;
- FIG 9: eine rein schematische Darstellung einer Bridge des Netzwerkes aus Figur 1 mit einem bidirektionalen Stream durch die Bridge gemäß einer Ausführungsform der Erfindung.

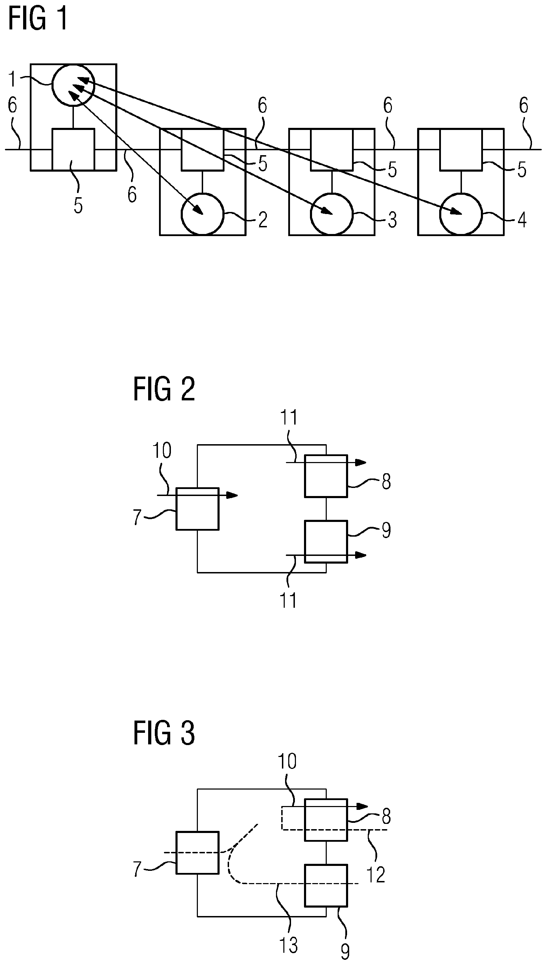

Die FIG 1 zeigt eine rein schematische Teildarstellung einer erfindungsgemäßen Vorrichtung für die Durchführung einer Ausführungsform des erfindungsgemäßen Steuerungsverfahrens für einen in der FIG nicht dargestellten industriellen technischen Prozess, beispielsweise einer Produktionsmaschine oder eines chemischen Prozesses.

Die Vorrichtung umfasst eine Zentraleinheit, die vorliegend durch einen Controller, konkret eine speicherprogrammierbare Steuerung (SPS) 1 gegeben ist sowie eine Mehrzahl von Peripheriegeräten, konkret Sensoren 2, Aktoren 3 sowie Peripheriegeräte 4, die sowohl einen Sensor als auch eine Aktor umfassen bzw. mit diesen verbunden sind. In der FIG 1 sind beispielhaft nur ein Sensor 2, ein Aktor 3 und ein Gerät 4 mit Sensor und Aktor dargestellt.

Um einen Austausch von Daten zwischen der SPS 1 und den Peripheriegeräten 2, 3, 4 zu ermöglichen, sind diese vorliegend über ein Ethernet-basiertes Netzwerk mit einer Vielzahl von Knotenpunkten, die bei dem dargestellten Ausführungsbeispiel jeweils durch eine Bridge 5 gegeben sind, verbunden. Bei dem Ethernet-basierten Netzwerk handelt es sich um solches mit P2P Links (keine Hubs, kein "shared medium").

Wie man der FIG 1 entnehmen kann, zeichnet sich das Ethernet-basierte Netzwerk mit der Vielzahl von Bridges 5 bei dem dargestellten Ausführungsbeispiel durch eine Linientopologie aus. Selbstverständlich kann auch eine andere aus dem Stand der Technik bekannte Netzwerktopologie, z.B. eine Baum-, Stern- oder Ring-Topologie, vorgesehen sein.

Im Betrieb erfassen Sie Sensoren 2, 4 in aus dem Stand der Technik hinlänglich bekannter Weise zyklisch Istzustände des technischen Prozesses, bei denen es sich etwa um Positions-oder Temperatursignale handeln kann, wobei betont sei, dass dies rein beispielhaft zu verstehen ist und die Überwachung anderer Parameter gleichermaßen möglich ist. Die Istzustände werden von den Sensoren 2, 4 über das Ethernet-basierte Netzwerk an die SPS 1 übermittelt.

Die SPS 1 ermittelt in aus dem Stand der Technik hinlänglich bekannter Weise auf Basis von den übermittelten Istzustände sowie gegebenenfalls weiterer Parameter Steuersignale, die wiederrum an Aktoren 3, 4 des Systems übertragen werden, so dass unter Berücksichtigung der erfassten Istzustände auf den technischen Prozess eingewirkt werden kann, wie ebenfalls hinlänglich vorbekannt ist.

Die Übertragung der Steuersignale, bei denen es sich beispielsweise um eine Betätigung eines Stellmotors, etwa für ein Ventil ober über ein Ein- oder Ausschalten bzw. Drosseln oder eine Erhöhung einer Heizung handeln kann, werden ebenfalls über das Ethernet-basierte Netzwerk von der SPS 1 an die Aktoren 3, 4 übertragen. Es sei betont, dass auch die genannten Steuersignale rein beispielhaft zu verstehen sind und - insbesondere je nach Art der Aktoren 3, 4 - beliebige andere Steuersignale alternativ oder zusätzlich ermittelt und über das Netzwerk an die Aktoren 3, 4 übertragen werden können.

Die Gesamtheit aller Istzustände bildet das sogenannte Prozessabbild der Eingänge und die aller Steuersignale das sogenannte Prozessabbild der Ausgänge.

Die Aktoren 3, 4 wirken, wenn sie ein Steuersignal von der SPS 1 erhalten haben entsprechend dem jeweiligen Signal auf den industriellen technischen Prozess ein, wobei auch dies - genau wie die Datenübermittlung - zyklisch erfolgt.

Die Übermittlung der mit den Sensoren 2, 4 erfassen Istzustände an die SPS 1 erfolgt erfindungsgemäß via Stream. Auch die Übermittlung der Kontrollsignale von der SPS 1 an die Aktoren 3, 4 erfolgt auf diese Weise. Diese Art der Datenkommunikation, die von dem AVB- sowie TSN-Standard bekannt ist, stellt insbesondere sicher, dass eine vorgegebene Latenzzeit, die von Stream zu Stream variieren kann, und insbesondere von der jeweiligen Anwendung abhängt, eingehalten wird. Somit wird sichergestellt, dass die Istzustände binnen einer vorbestimmten maximalen Latenzzeit bei der SPS 1 eintreffen, also zwischen dem Einspeisen der Daten in das Netzwerk bis zum Eingang der Daten bei der SPS 1 eine maximale Latenzzeit vergeht. Gleichermaßen wird sichergestellt, dass die Steuersignale binnen einer vorbestimmten maximalen Latenzzeit bei den Aktoren 3, 4 eintreffen. So kann etwa eine insbesondere echtzeit-kritische Kommunikation zwischen der SPS 1 und den Peripheriegeräten 2, 3,4 sichergestellt werden.

Dabei gilt, dass nach dem Stand der Technik ein Stream, wie er beispielsweise von der Audio/Video-Bridging (AVB) Taskgroup und insbesondere von der Time Sensitiv Networking (TSN) Taskgroup in der internationalen Norm IEE802.1 festgelegt ist, unter Rückgriff auf das zugehörige Stream-Reservierungsprotokoll (Stream Reservation Protocol - SRP) eingerichtet wird, wobei jedoch ausschließlich unidirektionale Streams erhalten werden können.

Insbesondere für die Datenkommunikation zwischen der SPS 1 und dem Peripheriegerät 4 mit Sensor und Aktor bestünde dabei der Nachteil, dass zwischen den beiden Kommunikationspartnern zwei unidirektionale Streams der vorbekannten Art - mit Datentransfer in entgegengesetzter Richtung - einzurichten wären. Für den Fall, dass die SPS 1 dem Sensor 2 und der Aktor 3 der SPS 1 eine Bestätigung senden soll, wenn ein Istzustand bzw. ein Steuersignal erfolgreich und insbesondere rechtzeitig eingegangen ist, wie vorliegend gewünscht bzw. erforderlich, wäre dies auch für den Datenaustausch zwischen der SPS 1 und dem Sensor 2 sowie der SPS 1 und dem Aktor 3 erforderlich, so dass für die drei in FIG 1 erkennbaren Peripheriegräte 2, 3, 4 bereits insgesamt sechs Streams gemäß den vorbekannten Standards erforderlich wären.

Dabei ist zu berücksichtigen, dass jeder Stream eine eigene Weiterleite-Adresse erfordert. Adressen sowie die zur Verwaltung von Streams benötigten Ressourcen sind in einem Netzwerk stark begrenzt, insbesondere, da sie stark Hardware-abhängig sind. Streams stellen dadurch eine sehr wertvolle Netzwerk-Ressource dar. Mit zunehmender Anzahl von Streams steigen der Verwaltungsaufwand und die dafür benötigten Ressourcen in jeder beteiligten Netzwerkkomponente, insbesondere in jeder Bridge 5 des Netzwerkes an. Es steigt auch der Verarbeitungsaufwand, da für jede Streamrichtung Nachrichten gemäß SRP (Stream Reservation Protocol) vom Talker zum Listener ausgetauscht und in den Bridges 5 verarbeitet werden

Dem wird erfindungsgemäß damit begegnet, dass nicht, wie von dem AVB- bzw. TSN-Standard vorbekannt unidirektionale sondern bidirektionale Streams für die Datenübertragung eingerichtet werden, konkret - für die in FIG 1 dargestellten Geräte - zwischen der SPS 1 und dem Sensor 2, der SPS 1 und dem Aktor 3 und der SPS 1 und dem Peripheriegerät 4 jeweils ein bidirektionaler Stream.

Gemäß der vorliegenden Erfindung ist hierzu eine Erweiterung des Stream-Reservierungsprotokolls nach vorbekanntem Standard vorgesehen.

Im Folgenden wird die Einrichtung der Streams näher beschrieben, wobei zur besseren Verdeutlichung der Unterschiede zum Vorbekannten zunächst die Vorgehensweise nach dem Stand der Technik erläutert und anschließend die erfindungsgemäße Vorgehensweise gegenübergestellt wird.

Im Folgenden wird davon ausgegangen, dass jede der Bridges 5 das in FIG 1 teilweise dargestellten Ethernet-basierten Netzwerkes jeweils vier Ports aufweist. Es sei angemerkt, dass es selbstverständlich möglich ist, dass Bridges 5 mit einer anderen Anzahl von Ports zum Einsatz kommen, wobei die im Folgenden beschriebenen Abläufe dann gleichermaßen gelten.

Für die Einrichtung eines gemäß dem Stand der Technik unidirektionalen Streams beispielsweise zwischen dem Peripheriegerät 4 und der SPS 1 erfolgt eine Reservierung gemäß dem für den AVB- oder TSN-Standard vorbekannten Reservierungsprotokolls an jeder der Bridges 5, die auf dem Netzwerkpfad zwischen der SPS 1 und dem Gerät 4 liegen, also über welche diese verbunden sind. Dabei wird der Stream in einem ersten Schritt von dem Gerät 4, welches im Falle der Übermittlung von mit dem Sensor dieses Gerätes 4 erfassten Istzuständen an die SPS 1 die gemäß AVB- oder TSN-Standard auch als Talker bezeichnete Datenquelle darstellt, angekündigt und es werden die Eigenschaften des Streams von dem Talker beschrieben. Von dem Gerät 4 werden insbesondere eine Stream-ID, eine Weiterleite-Adresse und eine Bandbreiteninformation für den von ihm angehenden Datentransfer angegeben.

Die Ankündigung des Streams wird an alle Knotenpunkte, vorliegend also Bridges 5 im Netzwerk verteilt, wobei dann jede Bridge 5 die Information des Empfangsports, also des Ports in Richtung des Talkers, über den die Ankündigung eingegangen ist und später auch die Daten eingehen werden, führt. Da gemäß dem Stand der Technik die Datenquelle auch als Talker bezeichnet wird, trägt dieser Port auch die Bezeichnung Talkerport.

In der FIG 2, welche rein schematisch das Abbild des Protokolls in der Control Plane verdeutlichen soll, ist linkerhand der Talkerport 7 dargestellt und gegenüberliegend auf der rechten Seite liegen zwei Ports 8, 9, über welche die Information über den angekündigten Stream weitergegeben wird und an denen sich Listener an den Stream anmelden können. Wie angemerkt ist für jede Bridge 5 der Talkerport 7, an welchem die Streamankündigung eingegangen ist, bekannt. In der FIG 2 ist die Richtung, in welche die Ankündigung erfolgt ist und welche später auch die Daten übertragen werden, durch einen großen Pfeil 10 durch den Talkerport 7 angedeutet. Die Weitergabe der Informationen durch die beiden gegenüberliegenden Ports 8, 9 ist durch kleinere Pfeile 11 durch diese Ports 8, 9 angedeutet.

An dem angebotenen Stream, über welchen die Informationen im Netzwerk verteilt wurden, meldet sich ein Listener, vorliegend die SPS 1 an und die Information über die Anmeldung wird über diejenigen Bridges 5, welche zwischen dem Talker 4 und dem Listener 1 liegen an den Talker, also das Gerät 4 übermittelt.

An denjenigen Bridges 5, die zwischen dem Talker 4 und dem Listener 1 liegen wird jeweils eine Reservierung an dem Port in Richtung des Listeners, also dem Listenerport 8 gemäß der von dem den Talker darstellenden Gerät 4 angegebenen Streambeschreibung durchgeführt, sofern die verfügbaren Ressourcen an der jeweiligen Bridge 5 ausreichen. Jeder Knotenpunkt 5 prüft, ob seine internen Ressourcen für im Rahmen des einzurichtenden Streams geforderte Performance (insbesondere bezüglich Datenmenge und Datendurchsatz) ausreichen. Ist dies der Fall, reserviert der Knotenpunkt 5 diese Ressourcen für den einzurichtenden Stream. Andernfalls erfolgt eine entsprechende Mitteilung an eine den Stream einrichtende Einrichtung. Über die Reservierung kann jeder Knotenpunkt 5 gewährleisten, dass er beim anschließenden Datentransfer die erforderliche Performance gewährleistet. Hierin unterscheiden sich geschützte Verbindungen darstellende Streams von ungeschützten Verbindungen.

Es sei angemerkt, dass auch nach einer entsprechenden Reservierung der Bridges 5 zunächst kein Datentransfer erfolgt, sondern nur der Status an den Ports 8 mit der Reservierung und den benötigen Ressourcen festgelegt ist. Die Weiterleitung von Daten ist solange blockiert, bis ein Listener auf dem Stream, für den die Information über den Talkerport 7 in der jeweiligen Bridge 5 im SRP gespeichert ist, angemeldet ist.

Es erfolgt, wie für den AVB- oder TSN-Standard hinlänglich vorbekannt, ein Listenerjoin und die Weiterleitung der vom Gerät 4 angebotenen Istzustände an die SPS 1 wird aktiviert. Es sei angemerkt, dass die Datenweiterleitung in von dem AVB-und TSN-Standard an sich bekannter Weise mittels einer sogenannten Streamfiltering Database (FDB) realisiert wird. Die Datenübertragung erfolgt in ebenfalls hinlänglich bekannter Weise in Form von einzelnen Datenpaketen, die auch als "Frames" bezeichnet werden. Die Bridges 5 leiten die Daten - unter Einhaltung einer Latenzzeit - jeweils weiter.

In der FIG 3, die eine rein schematische Darstellung der Data Plane für die Situation aktiver Weiterleitung erhält, ist die Datenweitergabe durch einen großen Pfeil 10 durch den oberen der beiden Ports 8, bei dem es sich um den Port 8 in Richtung des Gerätes 4 der getroffenen Bridge 5, also den Listenerport 8 für das Gerät 4 handelt, markiert.

Weiterhin in der FIG 3 angedeutet ist der im Falle von Ethernet automatische "Rückspeiseschutz" für die Datenweiterleitung über den Listenerport 8. Dies konkret über eine gestrichelte L-förmige Linie 12, die am Anfang des Pfeiles 10 ihren Ursprung hat. Ein Datentransfer durch den Listenerport 8 in der entgegensetzten Richtung, also in Richtung des Talkerports 7 ist bei Ethernet nicht möglich. Bei der Weiterleitung von Ethernetframes wird gemäß IEEE802.1Q der Empfangsport, also der in den Figuren 2 und 3 links dargestellte Talkerport 7 bei der Datenweiterleitung ausgeblendet.

Gemäß den Standards in der vorbekannten Form ist es möglich, dass sich mehr als ein Listener an dem vom Talker angebotenen Stream anmeldet, was in der FIG 3 durch eine weitere gestrichelte Linie 13 angedeutet ist, die durch den Talkerport 7 geht, dann zunächst in Richtung des oberen Listenerports 8 zeigt, über welchen eine Datenweiterleitung bereits erfolgt, und dann nach unten durch den Port 9 verläuft. An dem Port 9 könnte sich ein weiterer Listener anmelden.

Da der resultierende Stream gemäß den vorbekannten AVB- oder TSN-Standard einen Datenaustausch ausschließlich in einer Richtung ermöglicht, können Daten jedoch immer nur von dem für diesen Stream den Talker bildenden Gerät 4 in Richtung eines oder mehrerer anderer Geräte, also in Richtung der die Daten abonnierenden SPS 1 und gegebenenfalls in Richtung eines oder mehrerer weiterer Geräte übertragen werden. Ist ein Datenaustausch auch in Richtung des Gerätes 4 erforderlich, damit etwa, wie vorliegend, Steuersignale von der SPS 1 an den Aktor des Gerätes 4 übertragen werden können, muss ein zweiter unidirektionaler Stream in die entgegengesetzte Richtung eingerichtet werden.

Für den Fall des Datenaustauschs in beide Richtungen zwischen der SPS 1 und dem sowohl ein Aktor als auch ein Sensor umfassenden Peripheriegerät 4 beispielsweise würden sowohl von der SPS 1 als auch von dem Peripheriegerät 4 jeweils ein Stream angekündigt und jeweils der Stream beschrieben.

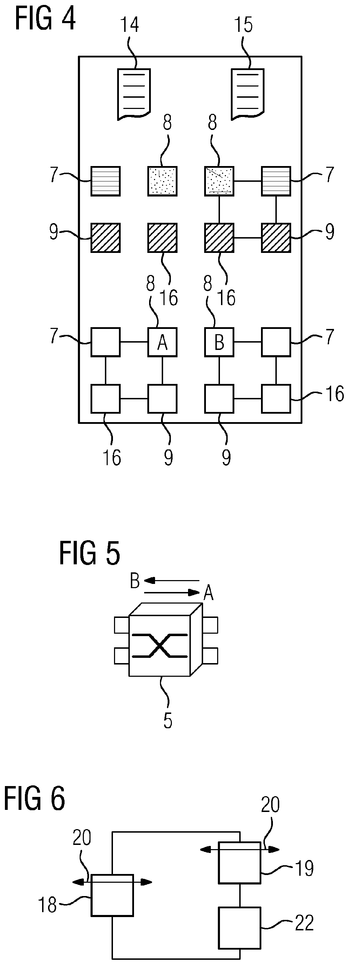

Dies ist in der FIG 4 durch ein eine erste Streambeschreibung repräsentierendes Datenblatt 14 sowie ein eine zweite Streambeschreibung symbolisierendes zweites Datenblatt 15 angedeutet. Die Streambeschreibung 14 gehört hier zu dem Stream, für welchen das Peripheriegerät 4 den Talker darstellt, mit dem also ermittelte Istzustände von dem Peripheriegerät 4 an die SPS 1 übertragen werden sollen und die Streambeschreibung 15 wird von der SPS 1 für den Transfer der Steuersignale zu dem Aktor des Peripheriegerätes 4 zusammen mit der entsprechenden Streamankündigung herausgegeben. Unter den jeweiligen Streambeschreibungen 14, 15 sind die resultierenden Stati für die Ports der Bridges 5 und zwar der SRP-Status (Mitte) sowie der Status nach der FDB (unten) skizziert.

In der FIG 4 ist angedeutet, dass gemäß dem SRP der Status an allen vier Ports in der Bridge 5 bekannt ist. Es sei angemerkt, dass der jeweils vierte Port 16 der Bridge 5, welcher in den Figuren 2 und 3 nicht dargestellt ist, hier ebenfalls gezeigt ist. Hinsichtlich der Stati gilt folgendes. An den in der FIG 5 gepunkteten Listenerports 8 war die Reservierung erfolgreich, an den mit schräger Linie schraffierten Ports 9, 16 wird die Information weitergegeben und der jeweils mit horizontaler Linie schraffierten Talkerport 7 ist bekannt.

Für jeden der beiden Streams A, B ist dabei eine eigene Weiterleite-Adresse erforderlich.

Nach der Aktivierung der Datenweiterleitung wird gemäß FIG 4 unten (Stati in der Data Plane) über den Stream A, welcher einen Datentransfer in Richtung der SPS 1 ermöglicht, Daten über den links mit A markierten Listenerport 8 weitergeleitet und für den Stream B, welcher einen Datentransfer in Richtung von der SPS 1 zu dem Peripheriegerät 4, konkret zu dessen Aktor ermöglicht, werden die zugehörigen Daten, also Steuersignale über den rechts mit "B" markierten Listenerport 8 weitergeleitet. Da über drei weiteren Ports 7, 9, 16 kein Datentransfer erfolgt, sind diese in der FIG 4 unten weiß dargestellt.

In der darunterliegenden FIG 5 ist eine Bridge 5 in stark vereinfachter Außenansicht dargestellt, oberhalb derer zwei entgegengesetzte Pfeile befinden, welche die beiden unidirektionalen Streams A, B in entgegengesetzter Richtung repräsentieren.

Die vorliegende Erfindung sieht nun vor, dass nicht zwei unidirektionale Streams mit zwei Weiterleite-Adressen für den Datentransfer von dem Gerät 4 zur SPS 1 und den Datentransfer in umgekehrter Richtung eingerichtet und die Datenweiterleitung über die zwei separaten Stream aktiviert wird, sondern ein neuartiger, bidirektionaler Stream mittels eines erweiterten Stream Reservation Protocols eingerichtet und Daten in beide Richtungen über den einen bidirektionalen Stream weitergeleitet werden. Dies geschieht wie folgt.

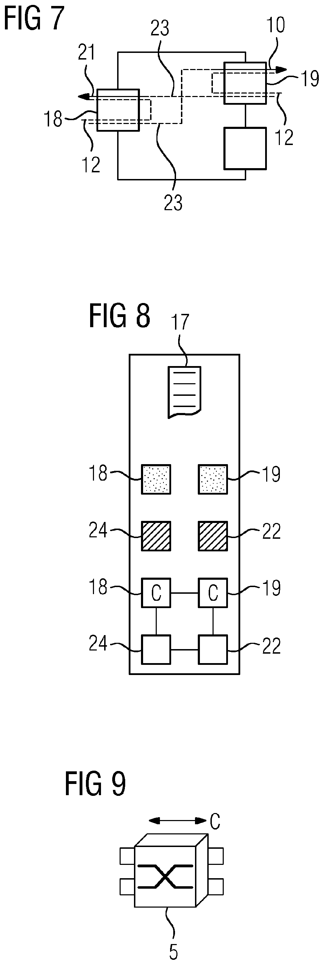

Das im Rahmen des erfindungsgemäßen Verfahrens den Stream-Initiator darstellende Gerät 4 kündigt, genau wie auch im Rahmen der bekannten Standards, einen Stream an und beschreibt diesen, wobei von dem Gerät 4 insbesondere eine Stream-ID, eine Weiterleite-Adresse und wenigstens eine Bandbreiteninformation für den von ihm angehenden Datentransfer angegeben werden. Für den Fall, dass für den Datentransfer in beide Richtungen die gleiche Bandbreite benötigt wird, unterscheidet sich die Ankündigung und Beschreibung nicht von derjenigen, die auch im Rahmen des AVB- oder TSN-Standards erfolgt (wie vorstehend beschrieben). Werden unterschiedliche Bandbreiten für die beiden Richtungen benötigt, wird in Abweichung zum Stand der Technik mit der Streambeschreibung auch eine Bandbreite für den "Rückkanal", also den Datentransfer von der SPS 1 zu dem Gerät 4, angegeben. Die nur eine erforderliche Streambeschreibung, die Bandbreitenangaben für die Hin- und Rückrichtung umfassen kann, ist in der FIG 8 in Analogie zu der FIG 4 durch ein schematisch dargestelltes Datenblatt 17 angedeutet.

Die Ankündigung des Streams wird wiederum an alle Knotenpunkte, vorliegend also Bridges 5 im Netzwerk verteilt, wobei dann jede Bridge 5 die Information des Empfangsports, also des Ports 18 in Richtung des Stream-Initiators, über den die Ankündigung eingegangen ist, führt. Der Port, über welchen die Ankündigung jeweils eingeht, wird vorliegend auch als Initiatorport 18 bezeichnet.

An dem von dem Stream-Initiator 4 angekündigten Stream meldet sich genau ein Stream-Teilnehmer, vorliegend die SPS 1 an. Über diejenigen Bridges 5, die auf dem Netzwerkpfad zwischen dem Stream-Initiator 4 und dem Stream-Teilnehmer 1 liegen, vorliegend also vier Bridges 5 (vgl. FIG 1), wird die Information der Anmeldung am Stream an den Stream-Initiator, also das Gerät 4 übermittelt.

Genau wie gemäß den vorbekannten Standards erfolgt an den Bridges 5 zwischen Initiator 4 und Teilnehmer 1 eine Überprüfung, ob jeweils an dem Port 19 in Richtung der den Stream-Teilnehmer bildenden SPS 1 genügen Ressourcen gemäß der vom Initiator, also dem Gerät 4 abgegebenen Streambeschreibung 17 vorhanden sind und es erfolgt eine Reservierung jeweils des Ports 19. Über diese Reservierung, die der vorbekannten entspricht, kann ein Datentransfer von dem Gerät 4 an die SPS 1 erfolgen.

In Abweichung von den bekannten Standards wird gemäß der Erfindung nun in den Bridges 5 zwischen Gerät 4 und SPS 1 zusätzlich eine Überprüfung der Ressourcen und eine Reservierung jeweils an dem Port 18 in Richtung des Stream-Initiators, also in Richtung des Gerätes 4 durchgeführt, wodurch ein Datentransfer auch in die Rückrichtung zu dem Gerät 4 möglich wird. Hierfür kommt ein gegenüber den bekannten Standards erweitertes Stream Reservation Protokoll zum Einsatz, welches die zusätzliche Reservierung für die Rückrichtung einschließt. Konkret gilt, dass die Traffic Specification (TSpec) um einen optionalen Parameter erweitert ist, der angibt, ob auch die Rückrichtung vom Stream-Teilnehmer zum Stream-Initiator unter der gleichen Stream-ID reserviert werden soll. Der Stream-Initiator kann dann im Systemhochlauf die entsprechenden bidirektionalen Streams mittels des neuen optionalen Parameters in der TSpec einrichten. Die Stream-Teilnehmer nutzen dann den Stream. Dies ist insbesondere möglich, da der Controller aus dem Engineering (Offline) alle relevanten Informationen über die angeschlossenen Sensoren/Aktoren hat.

In der FIG 6, welche in Analogie zu der FIG 2 die Control Plane zeigt, ist die erweiterte Reservierung dadurch angedeutet, dass sowohl durch den Initiatorport 18 als auch den Teilnehmerport 19 jeweils ein Doppelpfeil 20 verläuft.

Ist im Rahmen der Streambeschreibung für die Rückrichtung eine andere Bandbreite angegeben worden, wird die Reservierung an den Initiatorports 18 entsprechend für die abweichende Bandbreite durchgeführt. Ist dies nicht der Fall, entspricht die Reservierung derjenigen an den Teilnehmerports 19.

Es erfolgt der Listenerjoin und die Weiterleitung der vom Gerät 4 angebotenen Istzustände an die SPS 1 und die Weiterleitung von Steuersignalen von der SPS 1 an den Aktor des Gerätes 4 werden aktiviert. Es sei angemerkt, dass die Datenweiterleitung in an sich bekannter Weise mittels einer sogenannten Streamfiltering Database (FDB) realisiert wird.

In der FIG 7, welche analog zu der FIG 3 die Data Plane zeigt, ist die bidirektionale Datenweiterleitung daran erkennbar, dass zusätzlich zu dem Pfeil 10 durch den Teilnehmerport 19 ein entgegengesetzt orientierter Pfeil 21 durch den Inititatorport 18 verläuft und sowohl der Teilnehmer- als auch der Initiatorport 18 schraffiert dargestellt ist.

Da ein Datenaustausch über einen bidirektionalen Stream gemäß der vorliegenden Erfindung zwischen genau zwei Teilnehmern erfolgt, werden weitere Ports geblockt. In den Figuren 6 und 7 ist dies daran zu erkennen, dass der Port 22 weiß und ohne Pfeil dargestellt ist.

Der mit Ethernet einhergehende Rückspeiseschutz infolge des Ausblendens des Empfangsports bei der Weiterleitung ist in der FIG 7 ebenfalls angedeutet. Dieser greift sowohl für den Initiator- 18 als auch den Teilenehmer-Port, was in der FIG 7 in Analogie zu der FIG 3 durch gestrichelte Linien 12 angedeutet ist. Bei der Weiterleitung von Ethernetframes wird gemäß IEEE802.1Q der Empfangsport, also für die eine Richtung der Initiator- 18 und für die andere Richtung der Teilnehmerport 19, ausgeblendet. Der jeweils nur in die gewünschte Richtung stattfindende Datenfluss ist in der FIG 7 ebenfalls angedeutet und zwar durch weitere gestrichelte Linien 23.

Die FIG 8 enthält - in Analogie zu der FIG 4 für die vorbekannten Standards - nochmals die für alle Ports resultierenden Stati, konkret den SRP-Status (Mitte) und den nach FDB (unten). Konkret ist in der Mitte auch hier durch Punkte in dem Initiator- 18 und dem Teilnehmerport 19 angedeutet, dass eine Reservierung erfolgreich war und an den mit schräger Linie schraffierten weiteren Ports 22, 24 wird die Information weitergegeben. Auf der Daten-Ebene (FIG 8 unten) erfolgt eine Weiterleitung sowohl an dem Initiator- 18 als auch dem Teilnehmerport 19, was in der FIG durch einen Buchstaben "C" an diesen beiden Ports - für den bidirektionalen Stream C - angedeutet ist. Die beiden weiteren Ports 22, 24, an denen keine Datenweiterleitung über den bidirektionalen Stream erfolgt, sind in der FIG 8 unten weiß dargestellt.

Die FIG 9 zeigt analog zu der FIG 5 schematisch eine Bridge 5, wobei ein bidirektionaler Stream C durch diese durch einen darüber dargestellten Doppelpfeil angedeutet ist.

Es sei angemerkt, dass die oben unter Bezugnahme auf die Figuren 1 bis 5 zu den bekannten Standards und den Figuren 6 bis 9 für die Erfindung beispielhaft für die Ports einer Bridge 5 beschriebenen Abläufe und resultierende Stati für den Fall, dass mehrere Bridges 5 zwischen den Kommunikationspartnern liegen, für alle Bridges gelten.

Weiterhin sei betont, dass natürlich für beliebige weiter Paare mit jeweils genau zwei Kommunikationspartnern weitere bidirektionale Streams gemäß der vorliegenden Erfindung eingerichtet werden können, wie es vorstehend für das Gerät 4 und die SPS 1 beschrieben wurde. Etwa kann bei dem dargestellten Ausführungsbeispiel ein weiterer bidirektionaler Stream für einen Datenaustausch zwischen der SPS 1 und dem Sensor 2 sowie ein weiterer bidirektionaler Stream für einen Datenaustausch zwischen der SPS 1 und dem Aktor 3 eingerichtet werden. In der FIG 1 sind die bidirektionalen Streams zwischen der SPS 1 und jedem der Peripheriegeräte 2, 3, 4 durch Doppelpfeile angedeutet. Weitere bidirektionale Streams gemäß der vorliegenden Erfindung für weitere Gerätepaare, die Daten in beide Richtungen austauschen müssen, sind gleichermaßen möglich.

Die erfindungsgemäße Vorgehensweise ermöglicht eine Steuerung eines technischen Prozesses mit gegenüber dem Stand der Technik deutlich reduziertem Netzwerkaufwand und deutlich reduzierten Netzwerkressourcen für den für die Steuerung erforderlichen Datenaustausch, insbesondere die Übertragung von erfassten Istzuständen und auf Basis dieser ermittelter Steuersignale. Für sämtliche Kommunikationspartner eines insbesondere industriellen Netzes, die in einer 1:1-Beziehung Daten in beide Richtungen austauschen müssen, kann erfindungsgemäß mit jeweils nur einem bidirektionalen Stream und somit jeweils nur einer Weiterleite-Adresse ausgekommen werden. Da weniger Netzwerkressourcen für den Datenaustausch erforderlich sind, kann der mit der Steuerung verbundene Aufwand insgesamt reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Beispielsweise versteht sich, dass bei einem gegebenen Paar von zwei Kommunikationspartnern, zwischen denen gemäß der Erfindung über einen bidirektionalen Stream Daten in beide Richtungen ausgetauscht werden, jeder der beiden Partner der Stream-Initiator sein kann. Bei dem oben beschriebenen Beispiel etwa kann anstelle des den Stream ankündigenden, den Stream-Initiator bildenden Gerätes 4 auch die SPS 1 den Stream-Initiator darstellen und das Gerät 4 den Stream-Teilnehmer, der sich an den angekündigten Stream anmeldet. Für den späteren Datenaustausch macht es aufgrund der Bidirektionalität keinen Unterschied, wer ankündigt und wer sich anmeldet.

## Patentansprüche

1. Verfahren zur Daten-Kommunikation in einem Ethernet-basierten, insbesondere industriellen Netzwerk mit einem oder mehreren Knotenpunkten (5),
wobei an einem Knotenpunkt (5) basierend auf einer Reservierung für einen Stream in Richtung eines Stream-Teilnehmers (1, 2, 3, 4)eine Reservierung für einen Stream in Richtung eines Stream-Initiators (1, 2, 3, 4) vorgenommen wird.

2. Verfahren nach Anspruch 1,
**dadurch gekennzeichnet, dass**
über einen Stream ein Datentransfer zwischen den Teilnehmern (1, 2, 3, 4) wenigstens eines Stream-Teilnehmerpaares, welches genau einen Stream-Initiator (1, 2, 3, 4) und genau einen über einen Netzwerkpfad mit dem Stream-Initiator verbundenen Stream-Teilnehmer (1, 2, 3, 4) umfasst, erfolgt, wobei der Stream einen bidirektionalen Datentransfer zwischen dem Stream-Initiator (1, 2, 3, 4) und dem Stream- Teilnehmer (1, 2, 3, 4) ermöglicht und die Einrichtung des bidirektionalen Streams zumindest folgende Schritte umfasst:
- der Stream-Initiator kündigt einen Stream, insbesondere gemäß den AVB-Standards oder dem den IEEE 802.1 Standard erweiternden TSN-Standard für von ihm bereitgestellte Daten an und beschreibt die Eigenschaften des Streams, wobei er insbesondere zumindest eine Stream-ID und eine Weiterleite-Adresse und eine Bandbreiteninformation für den von ihm abgehenden Datentransfer angibt,
- die Ankündigung des Streams und die Stream-Beschreibung wird an den Knotenpunkt (5) bzw. die Knotenpunkte (5) im Netzwerk verteilt, wobei dann jeder Knotenpunkt (5) die Information seines Ports (18) in Richtung des Stream-Initiators (1, 2, 3, 4), also die Information seines Initiatorports (18) führt,
- der Stream-Teilnehmer (1, 2, 3, 4) meldet sich an den von dem Stream-Initiator (1, 2, 3, 4) angekündigten Stream an,
- über denjenigen Knotenpunkt (5) bzw. diejenigen Knotenpunkte (5), die auf dem Netzwerkpfad zwischen dem Stream-Teilnehmer (1, 2, 3,4) und dem Stream-Initiator (1, 2, 3, 4) liegen, wird die Information der Anmeldung von dem Stream-Teilnehmer (1, 2, 3, 4) an den Stream-Initiator (1, 2, 3, 4) übermittelt,
- an demjenigen Knotenpunkt (5) bzw. denjenigen Knotenpunkten (5), die auf dem Netzwerkpfad zwischen dem Stream-Teilnehmer (1, 2, 3, 4) und dem Stream-Initiator (1, 2, 3, 4) liegen, wird jeweils eine Reservierung an dem Port (19) in Richtung des Stream-Teilnehmers, also an dem Teilnehmerport (19) für die Datenübertragung von dem Stream-Initiator (1, 2, 3,4) an den Stream-Teilnehmer (1, 2, 3, 4) durchgeführt, und
zusätzlich jeweils eine Reservierung an dem Port (18) in Richtung des Stream-Initiators(1, 2, 3, 4), also dem Initiatorport (18) für die Datenübertragung von dem Stream-Teilnehmer (1, 2, 3, 4) an den Stream-Initiator (1, 2, 3, 4) durchgeführt, wobei die Reservierung des Initiatorports (18) auf der gleichen Weiterleite-Adresse erfolgt wie die Reservierung des Teilnehmerports (19).

3. Verfahren nach Anspruch 1 oder 2,
**dadurch gekennzeichnet, dass**
ein erweitertes Stream Reservation Protokoll verwendet wird, welches bevorzugt eine zusätzliche Reservierung eines Initiatorports (18) des Knotenpunktes (5) bzw. der Knotenpunkte (5) auf dem Netzwerkpfad zwischen dem Stream-Initiator (1, 2, 3, 4) und dem Stream-Teilnehmer (1, 2, 3, 4) auf der gleichen Weiterleite-Adresse wie die Reservierung des Teilnehmerports (19) des Knotenpunktes (5) bzw. der Knotenpunkte (5) ermöglicht.

4. Verfahren nach Anspruch 2 oder 3,
**dadurch gekennzeichnet, dass**
für den Knotenpunkt (5) bzw. die Knotenpunkte (5) auf dem Netzwerkpfad zwischen dem Stream-Initiator (1, 2, 3, 4) und dem Stream-Teilnehmer (1, 2, 3, 4) sowohl an dem jeweiligen Initiator- (18) als auch dem jeweiligen Teilnehmerport (19) geprüft wird, ob ausreichend Ressourcen für den bidirektionalen Stream zur Verfügung stehen und/oder dass in dem Knotenpunkt (5) bzw. den Knotenpunkten (5) auf dem Netzwerkpfad zwischen dem Stream-Initiator (1, 2, 3,4) und dem Stream-Teilnehmer (1, 2, 3, 4) sowohl an dem Initiator- (18) als auch dem Teilnehmerport (19) die Weiterleitung der Daten in die jeweilige Richtung für die eine gemeinsame Weiterleite-Adresse aktiviert wird.

5. Verfahren nach einem der vorhergehenden Ansprüche,
**dadurch gekennzeichnet, dass**
der Stream-Initiator (1, 2, 3, 4) im Rahmen der Stream-Beschreibung auch eine Bandbreite für den Rückkanal, also den Datentransfer von dem Stream-Teilnehmer (1, 2, 3, 4) zu dem Stream-Initiator (1, 2, 3, 4) angibt.

6. Verfahren nach einem der vorhergehenden Ansprüche,
**dadurch gekennzeichnet, dass**
nachdem sich genau ein Stream-Teilnehmer (1, 2, 3, 4) an dem Stream des Stream-Initiators (1, 2, 3, 4) angemeldet hat, die Anmeldung weiterer Stream-Teilnehmer (1, 2, 3, 4) an diesen Stream verhindert wird.

7. Verfahren nach einem der vorhergehenden Ansprüche,
**dadurch gekennzeichnet, dass**
die Beschreibung des Streams durch den Stream-Initiator (1, 2, 3, 4) wenigstens einen Traffic Specification Parameter umfasst.

8. Verfahren nach einem der vorhergehenden Ansprüche,
**dadurch gekennzeichnet, dass**
das Verfahren in einem Ethernet-basierten Netzwerk mit P2P Links ohne Hubs und ohne geteiltes Übertragungsmedium durchgeführt wird.

9. Verfahren nach einem der vorhergehenden Ansprüche,
**dadurch gekennzeichnet, dass**
es sich bei dem Stream-Initiator (1, 2, 3, 4) um einen Controller, insbesondere eine speicherprogrammierbare Steuerung (1), bevorzugt eines Steuerungssystems für einen technischen Prozess oder ein Fahrzeug handelt, und es sich bei dem Stream-Teilnehmer (1, 2, 3, 4) um ein Gerät (4), bevorzugt des Steuerungssystems, welches einen Sensor und einen Aktor umfasst oder mit einem Sensor und einem Aktor verbunden ist, oder um einen weiteren Controller, insbesondere eine weitere speicherprogrammierbare Steuerung (1), bevorzugt des Steuerungssystems handelt, oder umgekehrt, und auf Basis von zwischen dem Stream-Initiator (1, 2, 3, 4) und dem Stream-Teilnehmer (1, 2, 3, 4) über den bidirektionalen Stream in beiden Richtungen ausgetauschten Daten ein industrieller technischer Prozess oder ein Fahrzeug gesteuert wird.

10. Steuerungsverfahren für einen industriellen technischen Prozess oder ein Fahrzeug, bei dem
- ein Sensor eines Steuerungssystems zyklisch Istzustände des technischen Prozesses oder Fahrzeugs erfasst und an einen Controller, insbesondere eine speicherprogrammierbare Steuerung (1) des Steuerungssystems übermittelt,
- wobei der Controller (1) unter Berücksichtigung der an ihn übermittelten Istzustände Steuersignale für einen Aktor des Steuerungssystems ermittelt und zyklisch an den Aktor übermittelt,
- wobei der Aktor zyklisch entsprechend den an ihn übermittelten Steuersignalen auf den technischen Prozess oder das Fahrzeug einwirkt,
- wobei die Übermittlung der Istzustände und Steuersignale über ein Ethernet-basiertes Netzwerk mit einem oder mehreren Knotenpunkten (5) und unter Durchführung des Verfahrens nach einem der vorhergehenden Ansprüche erfolgt,
- wobei der Controller (1) den Stream-Initiator (1, 2, 3, 4) darstellt und ein Gerät (4), welches den Sensor und den Aktor umfasst oder mit dem Sensor und dem Aktor verbunden ist, den Stream-Teilnehmer (1, 2, 3, 4) oder umgekehrt, und für die Übermittlung der Istzustände von dem Sensor an den Controller (1) und für die Übermittlung der Steuersignale von dem Controller (1) an den Aktor ein bidirektionaler Stream mit einer Weiterleite-Adresse für beide Richtungen eingerichtet wird.

11. Vorrichtung zur Durchführung des Verfahrens nach einem der vorhergehenden Ansprüche, umfassend
- wenigstens ein Daten bereitstellendes, den Stream-Initiator (1, 2, 3, 4) darstellendes Gerät,
- wenigstens ein weiteres, den Stream-Teilnehmer (1, 2, 3, 4) des Stream-Initiators darstellendes Gerät, welches ebenfalls Daten bereitstellt,
wobei der Stream-Initiator (1, 2, 3, 4) und der Stream-Teilnehmer (1, 2, 3, 4) über ein Ethernet-basiertes Netzwerk mit einem oder mehreren Knotenpunkten (5) miteinander verbunden sind, und
wobei die Vorrichtung zur Durchführung des Verfahrens nach einem der vorhergehenden Ansprüche ausgebildet und eingerichtet ist, so dass für einen Austausch von Daten zwischen dem Stream-Initiator (1, 2, 3, 4) und dem Stream-Teilnehmer (1, 2, 3, 4) ein bidirektionaler Stream mit einer Weiterleite-Adresse für beide Richtungen eingerichtet werden kann oder eingerichtet wird.

12. Vorrichtung nach Anspruch 11 zur Steuerung eines industriellen technischen Prozess oder eines Fahrzeugs, wobei
- der Stream-Initiator (1, 2, 3, 4) durch einen Controller eines Steuerungssystems, insbesondere eine speicherprogrammierbare Steuerung (1) gegeben ist, und
- der Stream-Teilnehmer (1, 2, 3, 4) durch ein Gerät (4), welches einen Sensor und einen Aktor des Steuerungssystems umfasst oder mit einem Sensor und einem Aktor des Steuerungssystems verbunden ist, oder durch einen weiteren Controller (1) gegeben ist, oder umgekehrt,
- wobei die Vorrichtung ausgebildet und eingerichtet ist, um für die Übermittlung von Istzuständen von dem Sensor an den Controller (1) und für die Übermittlung von Steuersignalen von dem Controller (1) an den Aktor einen bidirektionalen Stream mit einer Weiterleite-Adresse für beide Richtungen einzurichten.

13. Computerprogramm umfassend Programmcode-Mittel zur Durchführung des Verfahrens nach einem der Ansprüche 1 bis 10.

14. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.
